# EUROPEAN PATENT APPLICATION

(11) **EP 3 313 143 A1**
(43) Date of publication of application: **25.04.2018**
(21) Application number: 15895479.2
(22) Date of filing: 01.12.2015
(51) Int. Cl.: H04W 76/02, H04W 88/06

(54) **DATA TRANSMISSION METHOD, DEVICE AND SYSTEM, AND COMPUTER STORAGE MEDIUM**

(30) Priority: 17.06.2015 CN 201510337189
(71) Applicant: ZTE Corporation, Shenzhen, Guangdong 518057 (CN)
(72) Inventor: ZHAO, Jie, Shenzhen Guangdong 518057 (CN)
(74) Representative: Lavoix
(86) International application number: PCT/CN2015/096156
(87) International publication number: WO 2016/201913

(57) **Abstract**

Embodiments of the present invention provide a data transmission method, device and system, and a computer storage medium. A network device receives a service request, the service request carrying a terminal identifier; determining, according to attribute information of the terminal corresponding to the terminal identifier, that a transmission mode for service data corresponding to the service request is a multiple Radio Access Technologies (RATs) data duplication transmission mode; and sending a response message to the service request, indicating transmission of the service data in the multiple RATs data duplication transmission mode.

## Description

### TECHNICAL FIELD

The disclosure relates to the field of wireless communications, and more particularly to a data transmission method, equipment and system and a computer storage medium.

### BACKGROUND

At present, a commercial wireless communication technology may provide relatively high reliability only in some scenarios, and has poor reliability which is incapable of meeting requirements of users in regions with poor coverage, extreme interference and network resource overloads. As a consequence, a current wireless communication network cannot guarantee reliability anytime and anywhere.

An overall architectural characteristic of a present 2nd/3rd/4th-Generation (2/3/4G) network is that all service requirements are met by only one network architecture form, and a design objective of the network is mainly to meet wireless communication requirements of humans. An objective of a 5th-Generation (5G) network is further to meet wireless communication requirements of things on the basis of meeting wireless wideband communication requirements of the humans, which makes technical indexes of different scenarios greatly changed. One network architecture form cannot be adapted to all service requirements, and different network architecture forms are required for different scenario requirements. A 5G network has the following key characteristics:
1. the network is wholly cloudified;
2. the network may be flexibly sliced, that is, use case scenario-oriented network optimization and network isolation is supported;
3. network functions and service requirements are formed by arrangement and deployment, that is, different network architecture forms are required for different scenario requirements; and
4. a deployment granularity of the network is refined to a functional component level from a logical entity level.

An existing wireless communication network cannot be applied to the fields of the Internet of things, in-vehicle networks, remote information processing and automation because its reliability cannot be guaranteed. In order to solve the problem of poor reliability of the existing wireless communication network, Ultra-Reliable/Critical Machine Type Communication (U-MTC) is an important objective of the 5G network. U-MTC has main communication requirements of ultra-reliability and ultra-low delay, and does not require high data throughput.

At present, an architecture of the 5G network has the following characteristics: focus is laid upon not network entities/nodes but network functions, the network functions are componentized, functional components are organized on the basis of use cases and interfaces are defined as not interfaces of the network entities but interfaces of the functional components. Functions of the 5G network are generally divided into the following parts: a Reliable Service Composition (RSC), Central Management Entities (CMEs), Radio Node Management (RNM) and Location of an Air Interface (AI). The above functions are subdivided into multiple small functional components, and each small functional component may be deployed at different locations according to requirements, and is namely deployed in different logical entities.

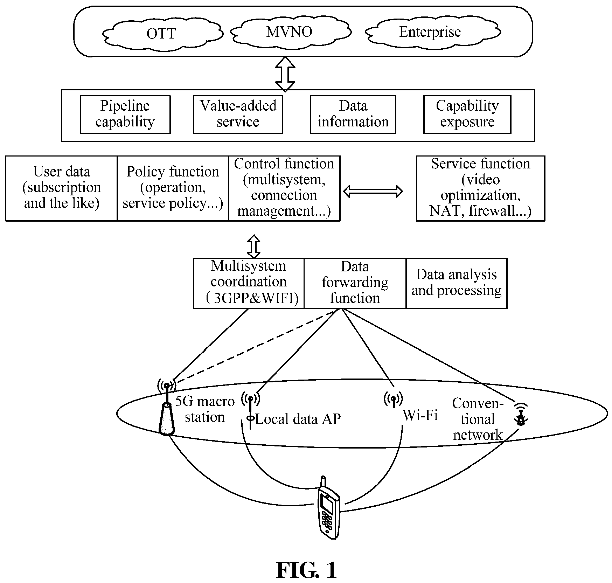

As shown in FIG. 1, in a network function-based 5G network architecture, multiple Radio Access Technologies (RATs) include RATs such as a 5G macro station, a local Access Point (AP), Wireless Fidelity (WiFi) and a conventional network. Because of service form and scenario diversity of the 5G network, for meeting an Ultra-Reliable Communication (URC) requirement of a user service, multiple types of cells are required to exist. From network systems, 2G, 3G, 4G and 5G cells, WiFi, APs and the like may exist. From coverage, macro cells, microcells, Ultra Dense Network (UDN) cells and the like may exist. Therefore, there may exist a problem about fusion of multiple RATs.

Therefore, there exists the problem of how to effectively implement URC of a user service by a data transmission method under a multi-RAT hybrid networking condition.

### SUMMARY

Embodiments of the disclosure provide a data transmission method, equipment and system, and a computer storage medium, which may effectively implement URC of a user service in a manner of a multiple RATs data duplication transmission under a multi-RAT hybrid networking condition.

The technical solutions of the embodiments of the disclosure are implemented as follows.

The embodiments of the disclosure provide a data transmission method, which includes that:
a service request is received, the service request containing a terminal identifier;
it is determined that a manner for transmitting service data corresponding to the service request is multiple RATs data duplication transmission according to attribute information of a terminal corresponding to the terminal identifier; and
a response message to the service request is sent, the response message indicating the service data to be transmitted in a manner of the multiple RATs data duplication transmission.

In the solution, the operation that the service data is transmitted in the manner of the multiple RATs data duplication transmission may include that:
same service data is sent through bearers of different RATs.

In the solution, the method may further include that:
the service data sent through the bearers of the different RATs is received through Air Interface, AI, connections of the different RATs; and
merging processing is performed on the service data sent through the bearers of the different RATs.

In the solution, the attribute information of the terminal corresponding to the terminal identifier may be reported in advance to network equipment by the terminal;
or, the service request may contain the attribute information of the terminal corresponding to the terminal identifier.

The embodiments of the disclosure further provide a computer storage medium having stored therein computer-executable instructions for executing the data transmission method of the embodiments of the disclosure.

The embodiments of the disclosure further provide a data transmission method, which includes that:
a service request is initiated; and
a response message to the service request is received, and service data corresponding to the service request is transmitted in a manner of a multiple RATs data duplication transmission indicated in the response message to the service request.

In the solution, the operation that the service data corresponding to the service request is transmitted in the manner of the multiple RATs data duplication transmission may include that:
same service data is sent through bearers of different RATs.

The embodiments of the disclosure further provide a computer storage medium having stored therein computer-executable instructions for executing the data transmission method of the embodiments of the disclosure.

The embodiments of the disclosure further provide network equipment configured for data transmission, which includes a receiving unit, a determination unit and a first sending unit, wherein
the receiving unit is configured to receive a service request, the service request containing a terminal identifier;
the determination unit is configured to determine that a manner for transmitting service data corresponding to the service request is multiple RATs data duplication transmission according to attribute information of a terminal corresponding to the terminal identifier; and
the first sending unit is configured to send a response message to the service request, the response message indicating the service data to be transmitted in a manner of the multiple RATs data duplication transmission.

In the solution, the operation that the service data is transmitted in the manner of the multiple RATs data duplication transmission may include that: same service data is sent through bearers of different RATs.

In the solution, the network equipment may further include a RAT AI unit and a merging processing unit, wherein
the RAT AI unit may be configured to receive the service data sent through the bearers of the different RATs through AI connections of the different RATs; and
the merging processing unit may be configured to perform merging processing on the service data sent through the bearers of the different RATs.

In the solution, the attribute information of the terminal corresponding to the terminal identifier may be reported in advance to the network equipment by the terminal;
or, the service request may contain the attribute information of the terminal corresponding to the terminal identifier.

The embodiments of the disclosure further provide a terminal configured for data transmission, which includes a second sending unit and a data transmission unit, wherein
the second sending unit is configured to initiate a service request; and
the data transmission unit is configured to receive a response message to the service request, and transmit service data corresponding to the service request in a manner of a multiple RATs data duplication transmission indicated in the response message to the service request.

In the solution, the operation that the data transmission unit transmits the service data corresponding to the service request in the manner of the multiple RATs data duplication transmission may include that: same service data is sent through bearers of different RATs.

The embodiments of the disclosure further provide a data transmission system, which includes network equipment and a terminal, wherein
the network equipment is configured to receive a service request, the service request containing a terminal identifier, determine that a manner for transmitting service data corresponding to the service request is multiple RATs data duplication transmission according to attribute information of the terminal corresponding to the terminal identifier, and send a response message to the service request, the response message indicating the service data to be transmitted in a manner of the multiple RATs data duplication transmission; and
the terminal is configured to initiate the service request, and receive the response message to the service request and transmit the service data corresponding to the service request in the manner of the multiple RATs data duplication transmission indicated in the response message to the service request.

According to the data transmission method, equipment and system and computer storage medium provided by the embodiments of the disclosure, the network equipment receives the service request, the service request containing the terminal identifier; it is determined that the manner for transmitting the service data corresponding to the service request is multiple RATs data duplication transmission according to the attribute information of the terminal corresponding to the terminal identifier; and the response message to the service request is sent to indicate the service data to be transmitted in the manner of the multiple RATs data duplication transmission. Therefore, URC of a user service may be effectively implemented in the manner of the multiple RATs data duplication transmission under a multi-RAT hybrid networking condition.

### BRIEF DESCRIPTION OF DRAWINGS

FIG. 1 is an architecture diagram of a network function-based 5G network.
FIG. 2 is a first implementation flowchart of a data transmission method according to an embodiment of the disclosure.
FIG. 3 is a second implementation flowchart of a data transmission method according to an embodiment of the disclosure.
FIG. 4 is a third implementation flowchart of a data transmission method according to an embodiment of the disclosure.
FIG. 5 is a first structure diagram of network equipment configured for data transmission according to an embodiment of the disclosure.
FIG. 6 is a second structure diagram of network equipment configured for data transmission according to an embodiment of the disclosure.
FIG. 7 is a structure diagram of a terminal configured for data transmission according to an embodiment of the disclosure.
FIG. 8 is a structure diagram of a data transmission system according to an embodiment of the disclosure.
FIG. 9 is an implementation flowchart of a data transmission method according to an application example of the disclosure.

### DETAILED DESCRIPTION

In embodiments of the disclosure, a service request is received, the service request containing a terminal identifier; it is determined that a manner for transmitting service data corresponding to the service request is multiple RATs data duplication transmission according to attribute information of a terminal corresponding to the terminal identifier and attribute information of a server; and a response message to the service request is sent, the response message to the service request indicating the service data to be transmitted in a manner of the multiple RATs data duplication transmission.

The disclosure will be further described below in detail in combination with the drawings and specific embodiments.

### First Embodiment

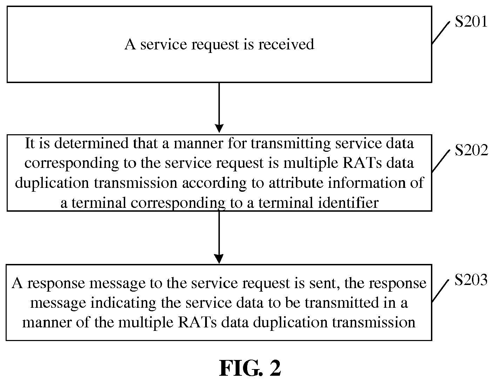

FIG. 2 is a first implementation flowchart of a data transmission method according to an embodiment of the disclosure. The data transmission method of the embodiment of the disclosure is applied to network equipment, and as shown in FIG. 2, includes the following steps.

In Step S201, a service request is received.

The service request contains a terminal identifier.

Specifically, the network equipment receives a service request initiated by a user terminal. The service request includes a service requiring wireless communication to be ultra-reliable and ultra-low in delay but having a relatively low requirement on data throughput, like U-MTC. The network equipment defaults to be equipment with a capability of supporting multiple RATs uplink data duplication transmission such as a 5G macro station, a UDN small station and the like.

In Step S202, it is determined that a manner for transmitting service data corresponding to the service request is multiple RATs data duplication transmission according to attribute information of a terminal corresponding to the terminal identifier.

The attribute information of the terminal corresponding to the terminal identifier includes type information of the terminal and/or type information of a user and/or service type information of the user, multi-RAT access capability information of the terminal, a wireless network scenario where the user of the terminal is currently located and the like.

Specifically, in an example, when the type information of the terminal is an industrial control user equipment type, the terminal has a capability of supporting multiple RATs data duplication transmission such as the 5G macro station, the UDN small station and the like, a region where the terminal is located is covered by the 5G macro station and the UDN small station, and the network equipment has a capability of supporting multiple RATs uplink data duplication transmission such as the 5G macro station, the UDN small station and the like, the network equipment determines that the manner for transmitting the service data corresponding to the service request is multiple RATs data duplication transmission according to the attribute information of the terminal corresponding to the terminal identifier.

In another example, when the type information of the user is a smart grid control user type, the terminal has a capability of supporting multiple RATs uplink data duplication transmission such as the 5G macro station, a 4G macro station and the like, the region where the terminal is located is covered by the 5G macro station and the 4G macro station and the network equipment has a capability of supporting multiple RATs uplink data duplication transmission information such as the 5G macro station and the 4G macro station, the network equipment determines that the manner for transmitting the service data corresponding to the service request is multiple RATs data duplication transmission according to the attribute information of the terminal corresponding to the terminal identifier.

Here, the attribute information of the terminal corresponding to the terminal identifier is reported in advance to the network equipment by the terminal; or, the service request contains the attribute information of the terminal corresponding to the terminal identifier.

In Step S203, a response message to the service request is sent to indicate the service data to be transmitted in a manner of the multiple RATs data duplication transmission.

Specifically, after determining that the manner for transmitting the service data corresponding to the service request is multiple RATs data duplication transmission, the network equipment establishes a radio bearer for a service corresponding to the service request by default, and sends the response message to the service request to the terminal to indicate transmitting the service data in the manner of the multiple RATs data duplication transmission. The operation that the service data is transmitted in the manner of the multiple RATs data duplication transmission includes that same service data is sent through bearers of different RATs.

It is important to supplement that, in a process of executing Steps S202-S203 in the embodiment of the disclosure, when determining that the manner for transmitting the service data corresponding to the service request is not multiple RATs data duplication transmission, the network equipment establishes the radio bearer for the user service by default, and feeds back a response message to the service request to the terminal to indicate that the service data corresponding to the service request is not to be transmitted in the manner of the multiple RATs data duplication transmission, that is, part of the service data is transmitted through multiple RATs respectively.

In such a manner, by the data transmission method of the embodiment of the disclosure, the network equipment determines that the manner for transmitting the service data corresponding to the service request is multiple RATs data duplication transmission according to the attribute information of the terminal corresponding to the terminal identifier in the received service request, and then sends the response message to the service request to the terminal to indicate transmitting the service data in the manner of the multiple RATs data duplication transmission. Therefore, URC of the user service may be effectively implemented in the manner of the multiple RATs data duplication transmission under a multi-RAT hybrid networking condition.

The embodiment of the disclosure further provides a computer storage medium having stored therein computer-executable instructions for executing the data transmission method of the embodiment of the disclosure.

### Second Embodiment

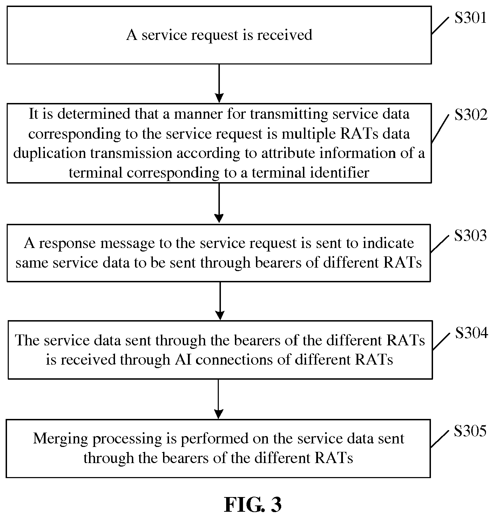

FIG. 3 is a second implementation flowchart of a data transmission method according to an embodiment of the disclosure. The data transmission method of the embodiment of the disclosure is applied to network equipment, and as shown in FIG. 3, includes the following steps.

In Step S301, a service request is received.

The service request contains a terminal identifier.

Specifically, the network equipment receives a service request initiated by a user terminal. The service request includes a service requiring wireless communication to be ultra-reliable and ultra-low in delay but having a relatively low requirement on data throughput, like U-MTC. The network equipment defaults to be equipment with a capability of supporting multiple RATs uplink data duplication transmission such as a 5G macro station, a UDN small station and the like.

In Step S302, it is determined that a manner for transmitting service data corresponding to the service request is multiple RATs data duplication transmission according to attribute information of a terminal corresponding to the terminal identifier.

The attribute information of the terminal corresponding to the terminal identifier includes type information of the terminal and/or type information of a user and/or service type information of the user, multi-RAT access capability information of the terminal, a wireless network scenario where the user of the terminal is currently located and the like.

Specifically, in an example, when the type information of the terminal is an industrial control user equipment type, the terminal has a capability of supporting multiple RATs data duplication transmission such as the 5G macro station, the UDN small station and the like, a region where the terminal is located is covered by the 5G macro station and the UDN small station and the network equipment has a capability of supporting multiple RATs uplink data duplication transmission such as the 5G macro station, the UDN small station and the like, the network equipment determines that the manner for transmitting the service data corresponding to the service request is multiple RATs data duplication transmission according to the attribute information of the terminal corresponding to the terminal identifier.

In another example, when the type information of the user is a smart grid control user type, the terminal has a capability of supporting multiple RATs uplink data duplication transmission such as the 5G macro station, a 4G macro station and the like, the region where the terminal is located is covered by the 5G macro station and the 4G macro station and the network equipment has a capability of supporting multiple RATs uplink data duplication transmission information such as the 5G macro station and the 4G macro station, the network equipment determines that the manner for transmitting the service data corresponding to the service request is multiple RATs data duplication transmission according to the attribute information of the terminal corresponding to the terminal identifier.

Here, the attribute information of the terminal corresponding to the terminal identifier is reported in advance to the network equipment by the terminal; or, the service request contains the attribute information of the terminal corresponding to the terminal identifier.

In Step S303, a response message to the service request is sent to indicate same service data to be sent through bearers of different RATs.

Specifically, after determining that the manner for transmitting the service data corresponding to the service request is multiple RATs data duplication transmission, the network equipment establishes a radio bearer for a service corresponding to the service request by default, and sends the response message to the service request to the terminal to indicate transmitting the service data in the manner of the multiple RATs data duplication transmission. The operation that the service data is transmitted in the manner of the multiple RATs data duplication transmission includes that the same service data is sent through the bearers of the different RATs.

In Step S304-Step S305, the service data sent through the bearers of the different RATs is received through AI connections of the different RATs, and merging processing is performed on the service data sent through the bearers of the different RATs.

Specifically, after the terminal sends the same service data through the bearers of the different RATs, the network equipment receives the service data sent through the bearers of the different RATs through the AI connections of the different RATs, and forwards it to a multi-RAT data processing functional component; and furthermore, the multi-RAT data processing functional component performs selective merging or soft merging processing on the service data sent through the bearers of the different RATs according to a preset merging policy. Finally, the multi-RAT data processing functional component sends the merged service data to an upper-layer service processing center.

In such a manner, by the data transmission method of the embodiment of the disclosure, the network equipment determines that the manner for transmitting the service data corresponding to the service request is multiple RATs data duplication transmission according to the attribute information of the terminal corresponding to the terminal identifier in the received service request, and then indicates the terminal to transmit the service data in the manner of the multiple RATs data duplication transmission by sending the response message to the service request; furthermore, after the terminal sends the same service data through the bearers of the different RATs, the network equipment receives the service data sent through the bearers of the different RATs through the AI connections of the different RATs; and merging processing is performed on the service data sent through the bearers of the different RATs. Therefore, URC of the user service may be effectively implemented under a multi-RAT hybrid networking condition.

The embodiment of the disclosure further provides a computer storage medium having stored therein computer-executable instructions for executing the data transmission method of the embodiment of the disclosure.

### Third Embodiment

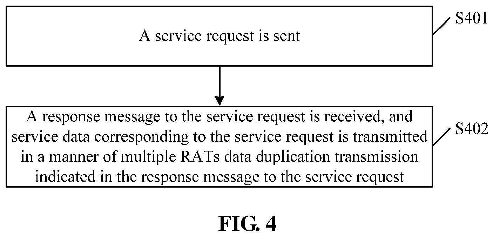

FIG. 4 is a third implementation flowchart of a data transmission method according to an embodiment of the disclosure. The data transmission method of the embodiment of the disclosure is applied to a terminal, and as shown in FIG. 4, includes the following steps.

In Step S401, a service request is sent.

The service request contains a terminal identifier.

Specifically, the terminal sends a service request to network equipment. The service request includes a service requiring wireless communication to be ultra-reliable and ultra-low in delay but having a relatively low requirement on data throughput, like U-MTC. The network equipment defaults to be equipment with a capability of supporting multiple RATs uplink data duplication transmission such as a 5G macro station, a UDN small station and the like.

In Step S402, a response message to the service request is received, and service data corresponding to the service request is transmitted in a manner of a multiple RATs data duplication transmission indicated in the response message to the service request.

Specifically, the terminal receives the response message to the service request sent by the network equipment, and transmits the service data corresponding to the service request in the manner of the multiple RATs data duplication transmission indicated in the response message to the service request.

Specifically, the operation that the service data is transmitted in the manner of the multiple RATs data duplication transmission includes that: the service data is sent through bearers of different RATs, that is, the same service data is sent through the bearers of the different RATs.

It is important to supplement that, when the response message to the service request sent by the network equipment indicates the terminal that the service data corresponding to the service request is not transmitted in the manner of the multiple RATs data duplication transmission, the terminal sends the different parts of the service data through the bearers of the different RATs, that is, part of the service data is transmitted through multiple RATs respectively. In such a manner, after the service data is subsequently received through the AI connections of the different RATs, the service data is directly sent to the upper-layer service processing center, and at this moment, there is no diversity gain.

In such a manner, by the data transmission method of the embodiment of the disclosure, the terminal initiates the service request, where the service request contains the terminal identifier; and receives the response message to the service request, so as to transmit the service data corresponding to the service request in the manner of the multiple RATs data duplication transmission. Therefore, URC of the user service may be effectively implemented in the manner of the multiple RATs data duplication transmission under a multi-RAT hybrid networking condition.

The embodiment of the disclosure further provides a computer storage medium having stored therein computer-executable instructions for executing the data transmission method of the embodiment of the disclosure.

### Fourth Embodiment

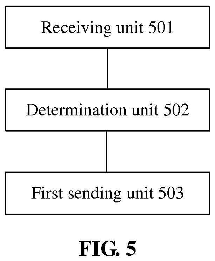

FIG. 5 is a structure diagram of network equipment configured for data transmission according to an embodiment of the disclosure. As shown in FIG. 5, the network equipment includes a receiving unit 501, a determination unit 502 and a first sending unit 503.

The receiving unit 501 is configured to receive a service request, where the service request contains a terminal identifier.

The determination unit 502 is configured to determine that a manner for transmitting service data corresponding to the service request is multiple RATs data duplication transmission according to attribute information of a terminal corresponding to the terminal identifier.

Here, the attribute information of the terminal corresponding to the terminal identifier may be reported in advance to network equipment by the terminal; or, the service request contains the attribute information of the terminal corresponding to the terminal identifier.

The first sending unit 503 is configured to send a response message to the service request, the response message indicating the service data to be transmitted in a manner of the multiple RATs data duplication transmission.

Specifically, the operation that the service data is transmitted in the manner of the multiple RATs data duplication transmission includes that: the same service data is sent through bearers of different RATs.

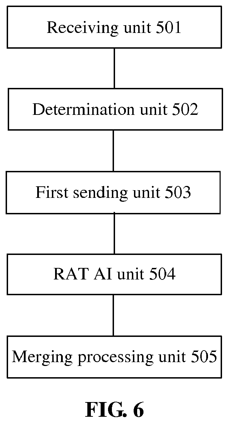

In an example, as shown in FIG. 6, the network equipment further includes a RAT AI unit 504 and a merging processing unit 505.

The RAT AI unit 504 is configured to receive the service data sent through the bearers of the different RATs through AI connections of the different RATs.

The merging processing unit 505 is configured to perform merging processing on the service data sent through the bearers of the different RATs.

Each unit configured to form the network equipment in the embodiment of the disclosure may be implemented through a processor in the network equipment, may also be implemented through a specific logical circuit, and for example, in a practical application, may be implemented through a Central Processing Unit (CPU), Micro Processor Unit (MPU), Digital Signal Processor (DSP), Field Programmable Gate Array (FPGA) and the like located in the network equipment. In addition, the RAT AI unit 504 may be formed by multiple AIs of the different RATs in the network equipment, and the merging processing unit 505 may be formed by a multi-RAT data processing functional component in the network equipment.

### Fifth Embodiment

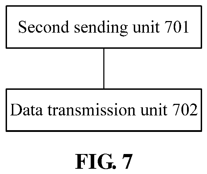

FIG. 7 is a structure diagram of a terminal configured for data transmission according to an embodiment of the disclosure. As shown in FIG. 7, the terminal includes a second sending unit 701 and a data transmission unit 702.

The second sending unit 701 is configured to initiate a service request.

The data transmission unit 702 is configured to receive a response message to the service request, and transmit service data corresponding to the service request in a manner of a multiple RATs data duplication transmission indicated in the response message to the service request.

Specifically, the operation that the data transmission unit 702 is configured to transmit the service data corresponding to the service request in the manner of the multiple RATs data duplication transmission includes that: the same service data is sent through bearers of different RATs.

Each unit configured to form the terminal in the embodiment of the disclosure may be implemented through a processor in the terminal, may also be implemented through a specific logical circuit, and for example, in a practical application, may be implemented through a CPU, MPU, DSP, FPGA and the like located in the terminal.

### Sixth Embodiment

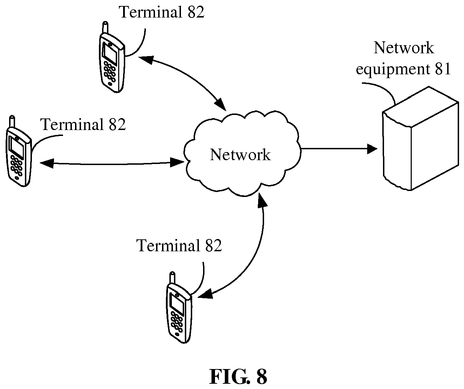

FIG. 8 is a structure diagram of a data transmission system according to an embodiment of the disclosure. As shown in FIG. 8, the system includes network equipment 81 and a terminal 82. Structures of the network equipment 81 and the terminal 82 may be the network equipment of the fourth embodiment of the disclosure and the terminal of the fifth embodiment of the disclosure respectively.

The network equipment 81 is configured to receive a service request, where the service request contains a terminal identifier. The network equipment 81 is further configured to determine that a manner for transmitting service data corresponding to the service request is multiple RATs data duplication transmission according to attribute information of a terminal corresponding to the terminal identifier. The network equipment 81 is further configured to send a response message to the service request, the response message indicating the service data to be transmitted in a manner of the multiple RATs data duplication transmission.

The terminal 82 is configured to initiate the service request, and is further configured to receive the response message to the service request and transmit the service data corresponding to the service request in the manner of the multiple RATs data duplication transmission indicated in the response message to the service request.

Based on the data transmission method, equipment and system of the first embodiment to the fifth embodiment of the disclosure, the data transmission method of the embodiment of the disclosure will be specifically described below in combination with a functional composition architecture of a 5G network through a specific application example. An RNM configured for multi-RAT resource coordination, RNM configured for multi-RAT user service data processing, upper-layer service processing center and the like in the functional composition architecture of the 5G network all belong to functional components, and may be deployed in different logical entities according to a scenario. During a practical application, in a tight coupling mode, both the RNM configured for multi-RAT resource coordination and the RNM configured for multi-RAT user service data processing may be deployed in a 5G macro station; and in a loose coupling mode, both the RNM configured for multi-RAT resource coordination and the RNM configured for multi-RAT user service data processing may be deployed in an independent local gateway. The upper-layer service processing center may usually be deployed in a core network.

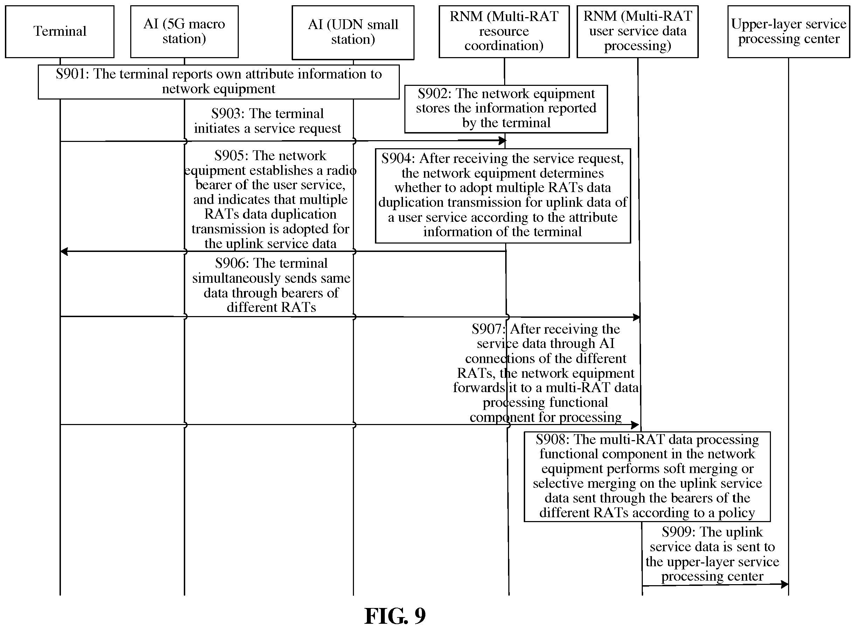

FIG. 9 is an implementation flowchart of a data transmission method according to an application example of the disclosure. The data transmission method is applied to a scenario of a U-MTC service of a factory industrial control type, and a 5G network is deployed with different RATs access such as a 5G macro station and a UDN small station, and is required to meet wireless communication requirements of ultra-reliability and ultra-low delay. In order to meet the requirements, the data transmission method includes the following steps.

In Step S901, a terminal reports own attribute information to network equipment.

The attribute information of the terminal includes type information of the terminal and/or type information of a user and/or service type information of a user, multi-RAT access capability information of the terminal, a wireless network scenario where the user of the terminal is currently located and the like.

In Step S902, the network equipment stores the information reported by the terminal.

In Step S903, the terminal initiates a service request.

In Step S904, after receiving the service request, the network equipment determines whether to adopt multiple RATs data duplication transmission to transmit uplink data of a user service according to the attribute information of the terminal.

Specifically, when the network equipment determines that the type information of the terminal is an industrial control user equipment type according to the attribute information corresponding to a terminal identifier, the terminal has a capability of supporting multiple RATs data duplication transmission such as the 5G macro station, the UDN small station and the like, a region where the terminal is located is covered by the 5G macro station, the UDN small station and the like and the network equipment has a capability of supporting multiple RATs uplink data duplication transmission such as the 5G macro station and the UDN small station, it is determined that a manner for transmitting service data corresponding to the service request is multiple RATs data duplication transmission.

In Step S905, the network equipment establishes a radio bearer for the user service, and indicates that multiple RATs data duplication transmission is adopted for the uplink service data.

In Step S906, when the uplink data of the user service is sent, the terminal simultaneously sends same data through bearers of different RATs.

In Step S907, after receiving the service data through AI connections of the different RATs, the network equipment forwards it to a multi-RAT data processing functional component for processing.

In Step S908, the multi-RAT data processing functional component in the network equipment performs soft merging or selective merging on the uplink service data sent through the bearers of the different RATs according to a policy.

In Step S909, after performing merging processing on the service data, the multi-RAT data processing functional component sends the uplink service data to the upper-layer service processing center.

The technical solutions recorded in the embodiments of the disclosure may be freely combined without conflicts.

Those skilled in the art should know that the embodiment of the disclosure may be provided as a method, a system or a computer program product. Therefore, the disclosure may adopt a form of hardware embodiment, software embodiment and combined software and hardware embodiment. Moreover, the disclosure may adopt a form of computer program product implemented on one or more computer-available storage media (including, but not limited to, a disk memory and an optical memory) including computer-available program codes.

The disclosure is described with reference to flowcharts and/or block diagrams of the method, equipment (system) and computer program product according to the embodiment of the disclosure. It should be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of other programmable data processing equipment to generate a machine, so that a device for realizing a function specified in one flow or more flows in the flowcharts and/or one block or more blocks in the block diagrams is generated by the instructions executed through the computer or the processor of the other programmable data processing equipment.

These computer program instructions may also be stored in a computer-readable memory capable of guiding the computer or the other programmable data processing equipment to work in a specific manner, so that a product including an instruction device may be generated by the instructions stored in the computer-readable memory, the instruction device realizing the function specified in one flow or many flows in the flowcharts and/or one block or many blocks in the block diagrams.

These computer program instructions may further be loaded onto the computer or the other programmable data processing equipment, so that a series of operating steps are executed on the computer or the other programmable data processing equipment to generate computer-implemented processes, and steps for realizing the function specified in one flow or many flows in the flowcharts and/or one block or many blocks in the block diagrams are provided by the instructions executed on the computer or the other programmable data processing equipment.

The above is only the specific implementation mode of the disclosure and not intended to limit the scope of protection of the disclosure. Any variations or replacements apparent to those skilled in the art within the technical scope disclosed by the disclosure shall fall within the scope of protection of the disclosure.

### INDUSTRIAL APPLICABILITY

According to the data transmission method of the embodiment of the disclosure, the network equipment receives the service request, the service request containing the terminal identifier; it is determined that the manner for transmitting the service data corresponding to the service request is multiple RATs data duplication transmission according to the attribute information of the terminal corresponding to the terminal identifier; and the response message to the service request is sent to indicate the service data to be transmitted in the manner of the multiple RATs data duplication transmission. Therefore, URC of the user service may be effectively implemented in the manner of the multiple RATs data duplication transmission under the multi-RAT hybrid networking condition.

## Claims

1. A data transmission method, **characterized in that** the method comprises:
receiving a service request, the service request containing a terminal identifier;
determining that a manner for transmitting service data corresponding to the service request is multiple Radio Access Technologies, RATs, data duplication transmission according to attribute information of a terminal corresponding to the terminal identifier; and
sending a response message to the service request, the response message indicating the service data to be transmitted in a manner of the multiple RATs data duplication transmission.

2. The method according to claim 1, wherein transmitting the service data in the manner of the multiple RATs data duplication transmission comprises:
sending the service data through bearers of different RATs.

3. The method according to claim 2, further comprising:
receiving the service data sent through the bearers of the different RATs through Air Interface, AI, connections of the different RATs; and
merging the service data sent through the bearers of the different RATs.

4. The method according to any one of claims 1-3, wherein the attribute information of the terminal corresponding to the terminal identifier is reported in advance to network equipment by the terminal;
or the service request contains the attribute information of the terminal corresponding to the terminal identifier.

5. A data transmission method, **characterized in that** the method comprises:
initiating a service request; and
receiving a response message to the service request, and transmitting service data corresponding to the service request in a manner of multiple Radio Access Technologies, RATs, data duplication transmission indicated in the response message to the service request.

6. The method according to claim 5, wherein transmitting the service data corresponding to the service request in the manner of the multiple RATs data duplication transmission comprises:
sending the service data through bearers of different RATs.

7. A network equipment for data transmission, **characterized in that** the network equipment comprises a receiving unit, a determination unit and a first sending unit, wherein
the receiving unit is configured to receive a service request, the service request containing a terminal identifier;
the determination unit is configured to determine that a manner for transmitting service data corresponding to the service request is multiple Radio Access Technologies, RATs, data duplication transmission according to attribute information of a terminal corresponding to the terminal identifier; and
the first sending unit is configured to send a response message to the service request, the response message indicating the service data to be transmitted in a manner of the multiple RATs data duplication transmission.

8. The network equipment according to claim 7, wherein transmitting the service data in the manner of the multiple RATs data duplication transmission comprises: sending the service data through bearers of different RATs.

9. The network equipment according to claim 8, further comprising a RAT Air Interface, AI, unit and a merging processing unit, wherein
the RAT AI unit is configured to receive the service data sent through the bearers of the different RATs through AI connections of the different RATs; and
the merging processing unit is configured to perform merging processing on the service data sent through the bearers of the different RATs.

10. The network equipment according to any one of claims 7-9, wherein the attribute information of the terminal corresponding to the terminal identifier is reported in advance to the network equipment by the terminal;
or the service request contains the attribute information of the terminal corresponding to the terminal identifier.

11. A terminal for data transmission, **characterized in that** the terminal comprises a second sending unit and a data transmission unit, wherein
the second sending unit is configured to initiate a service request; and
the data transmission unit is configured to receive a response message to the service request, and to transmit service data corresponding to the service request in a manner of multiple Radio Access Technologies, RATs, data duplication transmission indicated in the response message to the service request.

12. The terminal according to claim 11, wherein the operation that the data transmission unit transmits the service data corresponding to the service request in the manner of the multiple RATs data duplication transmission comprises that: the service data is sent through bearers of different RATs.

13. A data transmission system, **characterized in that** the system comprises a network equipment and a terminal, wherein
the network equipment is configured to receive a service request, the service request containing a terminal identifier, determine that a manner for transmitting service data corresponding to the service request is multiple Radio Access Technologies, RATs, data duplication transmission according to attribute information of the terminal corresponding to the terminal identifier, and send a response message to the service request, the response message indicating the service data to be transmitted in a manner of the multiple RATs data duplication transmission; and
the terminal is configured to initiate the service request, receive the response message to the service request and transmit the service data corresponding to the service request in the manner of the multiple RATs data duplication transmission indicated in the response message to the service request.

14. A computer storage medium having stored therein computer-executable instructions for executing the data transmission method according to any one of claims 1-4.

15. A computer storage medium having stored therein computer-executable instructions for executing the data transmission method according to claim 5 or 6.
